# EUROPÄISCHE PATENTANMELDUNG

(11) **EP 1 703 149 A2**
(43) Veröffentlichungstag der Anmeldung: **20.09.2006**
(21) Anmeldenummer: 06005371.7
(22) Anmeldetag: 16.03.2006
(51) Int. Cl.: F16C 3/02, F16C 33/66

(54) **Fluidabgabeeinrichtung für Wellen**

(30) Priorität: 18.03.2005 DE 202005004417 U
(71) Anmelder: Delimon GmbH, 40227 Düsseldorf (DE)
(72) Erfinder: Czempisz Jörg, Dipl.-Ing., 47906 Kempen (DE); Wons Andreas, Dipl.-Ing., 47445 Moers (DE); Gaunitz Wolfgang, Projekt Ing., 41469 Neuss (DE)
(74) Vertreter: Stenger, Watzke & Ring

(57) **Zusammenfassung**

Die Erfindung betrifft eine Fluidabgabeeinrichtung für Wellen (1), mit einem der Welle (1) zugeordneten Wellenringabschnitt (14), der sich bei Drehung der Welle mit der Welle mitdreht, und einem um den Wellenringabschnitt herum angeordneten, bei Drehung der Welle (1) feststehenden Ringkörper (13), der einen Einlaß (12) für das Fluid aufweist, wobei zwischen dem Wellenringabschnitt (14) und dem Ringkörper (13) Wälzkörper angeordnet sind, an denen sich der Wellenringabschnitt und der Ringkörper abstützen, und wobei dem Wellenringabschnitt (14) ein Durchlaß zugeordnet ist, der mit dem Einlaß (12) in Verbindung steht.

## Beschreibung

Die Erfindung betrifft eine Fluidabgabeeinrichtung für Wellen. Insbesondere betrifft die Erfindung eine Zentralschmiereinrichtung zur Schmierung von Gelenkwellenlagern und Gelenkwellenausgleich mit Schmiermittel, vorzugsweise Fett.

In der Praxis ist die Schmierung von Gelenkwellen unerläßlich. Die Schmierung muß in regelmäßigen Intervallen durchgeführt werden. Geschieht dies nicht zuverlässig, kann es zu einem vorzeitigen Verschleiß der Gelenke kommen. Dieser Vorgang erfolgt schleichend. Er setzt bereits damit ein, daß die Gelenke zunehmend größere Toleranzen aufweisen. Insbesondere in Bereichen, in denen mit hoher Genauigkeit gearbeitet bzw. gefertigt wird, ist dies höchst unerwünscht und kann zum Ausschuß der hergestellten Produkte führen. Darüber hinaus können auch die Wellen selbst Schaden nehmen. Unter Umständen führt dies zu ganz erheblichen Kosten für die Wiederinstandsetzung.

Zur Vermeidung der vorstehenden Probleme ist also eine regelmäßige Schmierung unerläßlich. In Walzbetrieben beispielsweise werden hierzu die Walzen angehalten, die Schmierung im Stillstand durchgeführt und anschließend die Walzen wieder angefahren. Das Prozedere ist aufwendig, aber bisher in der Praxis üblich. Bedenkt man die hohen kostenmäßigen Ausfälle für den Stillstand in einem Walzwerk - eine Stillstand-Stunde kann durchaus größenordnungsmäßig 100.000,00 € betragen - wird der Bedarf an alternativen Lösungsmöglichkeiten deutlich.

Aus der DE 8206781.3 U1 ist eine Zentralschmiereinrichtung für Gelenkwellen bekannt, die einen sich mit der Gelenkwelle drehenden Gelenkwellenring und einen feststehenden Statorring aufweist, der gegenüber dem Gelenkwellenring abgedichtet ist. Der Statorring weist einen Schmiermitteleinlaß auf, durch den Schmiermittel eingeführt und über eine Nut in den Gelenkwelienring eingeleitet wird. Von dem Gelenkwellenring aus gehen Leitungen ab, die sich mit der Welle mitdrehen und unmittelbar an die Wellengelenke geführt sind. Dort können sie das Schmiermittel ortsgenau abgeben.

Das grundsätzliche Prinzip der Zentralschmiereinrichtung hat gegenüber der herkömmlichen Schmierung wesentliche Vorteile. Insbesondere kann die Schmierung im Betrieb erfolgen. Damit brauchen die Gelenkwellen zur Schmierung nicht mehr angehalten zu werden.

Die vorbekannte Zentralschmiereinrichtung weist jedoch auch erhebliche Nachteile auf. In der Praxis sind Leckverluste insbesondere bei zusätzlicher radialer Belastung der Zentralschmiereinrichtung möglich. Zwar sind eine Reihe von Dichtungen vorgesehen, die den Gelenkwellenring gegen den Statorring abdichten sollen, jedoch liegt der vorliegenden Erfindung die Erkenntnis zugrunde, daß es zu translatorischen Relativbewegungen zwischen dem Gelenkwellenring und dem Statorring kommen kann, die dann zu einer Verminderung oder gar Aufhebung der Dichtwirkung der Dichtungen führen.

Ein weiterer wesentlicher Nachteil der bekannten Zentralschmiereinrichtung liegt darin, daß der Statorring axial lediglich durch radiale Ansätze des Gelenkwellenrings bzw. Rotationskörpers einerseits und andererseits durch einen Sicherungssteg gehalten ist. Eine derartige Anordnung ist zwar für einen waagerechten Einbau unter Umständen geeignet, jedoch kann es in bestimmten Betriebssituationen zu einer Verspannung zwischen dem umlaufenden Gelenkwellenring und dem feststehenden Statorkörper kommen. Dies äußert sich zunächst in Reibungsverlusten, die tatsächlich in einem regelrechten Festfressen gipfeln können. Zu derartigen Reibungsverlusten oder gegebenenfalls zu einem Verspannen kann es insbesondere dann kommen, wenn die bekannte Zentralschmiereinrichtung auf Gelenkwellen zum Einsatz kommt, die andere als waagerechte Einbaulagen aufweisen, beispielsweise eine Neigung von 45°.

Ausgehend von der bekannten Zentralschmiereinrichtung liegt der Erfindung die **Aufgabe** zugrunde, unter Behebung der vorstehend geschilderten Nachteile eine Fluidabgabeeinrichtung zu schaffen, die eine zuverlässigere Abdichtung zur Verfügung stellt und darüber hinaus auch besser zusätzlichen axialen und/oder radialen Kräften standhält.

Diese Aufgabe wird erfindungsgemäß gelöst durch eine Fluidabgabeeinrichtung für Wellen, mit einem der Welle zugeordneten Wellenringabschnitt, der sich bei Drehung der Welle mit der Welle mitdreht, und mit einem um den Wellenringabschnitt herum angeordneten, bei Drehung der Welle feststehenden Ringkörper, der einen Einlaß für das Ventil aufweist, wobei zwischen dem Wellenringabschnitt und dem Ringkörper Wälzkörper angeordnet sind, an denen sich der Wellenringabschnitt und der Ringkörper abstützen, und wobei dem Wellenringabschnitt ein Durchlaß zugeordnet ist, der mit dem Einlaß in Verbindung steht. Vorzugsweise ist der Wellenringabschnitt als Wellenring ausgebildet, der fest mit der Welle verbindbar ist.

Die Erfindung hat gegenüber der bekannten Zentralschmiereinrichtung erhebliche Vorteile. Die Wälzkörper halten den Wellenringabschnitt und den feststehenden Ring stets in einem definierten Abstand zueinander. Dies bedeutet, daß sich die Dichtungen stets in einer definierten Stellung befinden, und zwar unabhängig davon, ob auch radiale Kräfte an der Fluidabgabeeinrichtung angreifen oder nicht.

Ferner gestatten die Wälzkörper eine Relativbewegung des Wellenringabschnitts zu dem Ringkörper, die im wesentlichen unabhängig von der Umfangsgeschwindigkeit der Welle ist. Bei der bekannten Zentralschmiereinrichtung hingegen können Fälle auftreten, bei denen im Spalt zwischen dem Gelenkwellenring und dem feststehenden Ringkörper (Statorring) ungünstige Strömungsverhältnisse zu Reibungsverlusten oder Schmiermittelaustritt führen.

Darüber hinaus weist die Erfindung den weiteren wesentlichen Vorteil auf, daß Wellen mit der erfindungsgemäßen Fluidabgabeeinrichtung auch in bestimmten Grenzen Axialkräfte aufnehmen kann, ohne daß nicht tolerierbare Reibungsverluste zu befürchten sind. Dies gestattet auch einen Einbau der Wellen unter einem Neigungswinkel von bis zu 90° (vertikale Stellung).

Die Wälzkörper sind vorzugsweise als Kugeln ausgebildet. Gleichermaßen denkbar sind Rollen-, Tonnen- oder Nadellager.

Besonders vorteilhaft ist eine Anordnung, bei der die Wälzkörper im Strömungsweg des Fluids angeordnet sind. Bei der Verwendung eines Schmiermittels werden die Reibstellen zwischen dem Ringkörper, den Wälzkörpern und dem Wellenring(-abschnitt) bereits durch das Passieren des Schmiermittels ausreichend geschmiert. Eine gesonderte Schmierung kann entfallen. Vorzugsweise sind die Wälzkörper fluiddicht vom Wellenring(-abschnitt) und vom Ringkörper umschlossen. Dabei ist es zweckmäßig, wenn das durch den Ringkörper hindurchtretende und in den Wellenring(-abschnitt) eintretende Schmiermittel gleichzeitig die vorgesehenen Dichtungen schmiert. Eine derartige Konstruktion erhöht die Lebensdauer der erfindungsgemäßen Fluidabgabeeinrichtung ganz erheblich.

Die Erfindung kann bereits werksseitig auf die Welle aufgebracht oder alternativ nachträglich nachgerüstet werden. In jedem Fall ist es besonders vorteilhaft, wenn der Wellenring mehrteilig ausgebildet ist. Dadurch wird ein Öffnen und Schließen der Fluidabgabeeinrichtung beispielsweise zu Inspektionszwecken oder Austausch verschlissener Bauteile ermöglicht. Als konkrete Konstruktion hat sich ein zweiteiliger Wellenring bewährt, der auf der Welle ineinanderschiebbar ist, derart, daß ein oberer Absatz des einen Teils des Wellenrings einen unteren Absatz des anderen Teils des Wellenrings übergreift. Beide Wellenringabschnitte können über eine oder mehrere Schraubverbindungen aneinander gesichert werden, wobei einer der Teile zur Festlegung auf der Welle beispielsweise auf der Welle aufgeschweißt sein kann. Alternativ kann vorgesehen sein, daß zusätzlich zu den beiden Wellenringteilen ein dritter Ringabschnitt vorgesehen ist, der seinerseits auf der Welle festgeschweißt ist und mit dem (Teil-) Wellenring verschraubt ist.

Eine wesentliche Weiterbildung der Erfindung ist dadurch gekennzeichnet, daß der Wellenring(-abschnitt) Lagerflächen für die Wälzkörper bildet. Es brauchen also nicht - wie bei herkömmlichen Lagern üblich - ein Innen- und ein Außenring verwendet werden, sondern vielmehr bilden der Wellenring(-abschnitt) selbst und vorzugsweise auch der Ringkörper die Lauf- bzw. Lagerflächen, zwischen denen die Wälzkörper laufen. Bei entsprechender Anzahl der Wälzkörper ist ferner ein Lagerkäfig entbehrlich, da die Wälzkörper sich gegenseitig in Stellung halten. Das Schmiermittel kann problemlos durch den Wälzkörperring hindurchtreten und sorgt gleichzeitig für eine hervorragende Schmierung der Wälzkörper selbst. Es ergibt sich eine insgesamt stabile und vor allem auch platzsparende Anordnung. Dies gilt vor allem auch dann, wenn der Wellenring einen Auslaß für das Fluid aufweist, der seitlich (axial) angeordnet ist.

Vorzugsweise sind die Lagerflächen geneigt zur Längsachse der Welle angeordnet. Dies gestattet eine Aufnahme auch von Axialkräften, wie sie beispielsweise auftreten, wenn die gesamte Gelenkwelle zur Horizontalen geneigt betrieben wird. Trotz derartiger axialer (und ggf. zusätzlich auch radialer) Komponenten ist stets eine leichtgängige Relativbewegung zwischen dem Wellenring und dem Ringkörper gewährleistet.

Wie bereits zuvor ausgeführt, kann der Wellenring mehrteilig ausgebildet sein. Dies gestattet nicht nur eine einfache Montage, sondern schafft gleichermaßen eine Möglichkeit zur Inspektion oder zum Austausch einzelner ggf. verschlissener Komponenten. Es ist zweckmäßig, wenn alternativ oder zusätzlich auch der Ringkörper mehrteilig ausgebildet ist, wobei er vorzugsweise derart zerlegbar ist, daß bei komplett montierter Fluidabgabeeinrichtung durch Abnehmen eines Teils des Ringkörpers mindestens eine Dichtung zugänglich ist. Der innen angeordnete Wellenring kann also beim Austausch der Dichtung(en) montiert bleiben. Es sind jeweils nur die entsprechenden Ringkörperteile abzunehmen, um an die Dichtungen zu gelangen. Diese Ringkörperteile können ihrerseits aus entsprechenden Ringabschnitten bestehen, die seitlich an den Haupt-Ringkörper angesetzt sind.

Vorzugsweise weist der Wellenring mindestens einen im wesentlichen axialen Durchtritt für eine Fluidleitung auf. Auf diese Weise kann achsennah eine Fluidleitung in einen Bereich "hinter" die Fluidabgabeeinrichtung geführt werden, um dort angeordnete Reibstellen zu versorgen. Der Durchtritt kann als einfache koaxiale Bohrung durch den ggf. mehrteilig ausgebildeten Wellenring ausgebildet sein.

In wesentlicher Weiterbildung der Erfindung wird vorgeschlagen, daß ein Progressivverteiler vorgesehen ist, der in strömungstechnischer Verbindung mit dem Wellenring steht und sich mit der Welle mitdreht. Der Progressivverteiler wird in aller Regel nur durch eine einzige Leitung, die den Progressivverteiler mit der Fluidabgabeeinrichtung verbindet, gespeist. Der Progressivverteiler selbst verteilt den Schmierstoff über verschiedene Ausgänge zu den einzelnen Schmierstellen.

Der Verteiler arbeitet selbsttätig. In dem Verteilergehäuse sind mehrere Kolben angeordnet, die aufgrund des Schmiermitteldrucks hin- und hergehen und somit nacheinander das Schmiermittel zu den verschiedenen Auslässen leitet. Bei niedrigeren Umdrehungen der Welle bedarf es auf der Welle keines Gegengewichts zu dem Progressivverteiler. Erst bei höheren Drehzahlen (beispielsweise ab 500 U/min) können Gegengewichte erforderlich werden.

Im folgenden wird die Erfindung anhand eines bevorzugten Ausführungsbeispiels im Zusammenhang mit der beigefügten Zeichnung näher erläutert. Die Zeichnung zeigt in:
Fig. 1 in schematischer Darstellung eine Gelenkwelle mit einer aufgesetzten erfindungsgemäßen Fluidabgabeeinrichtung;
Fig. 2 in einer vergrößerten Schnittdarstellung die erfindungsgemäße Fluidabgabeeinrichtung nach Fig. 1.

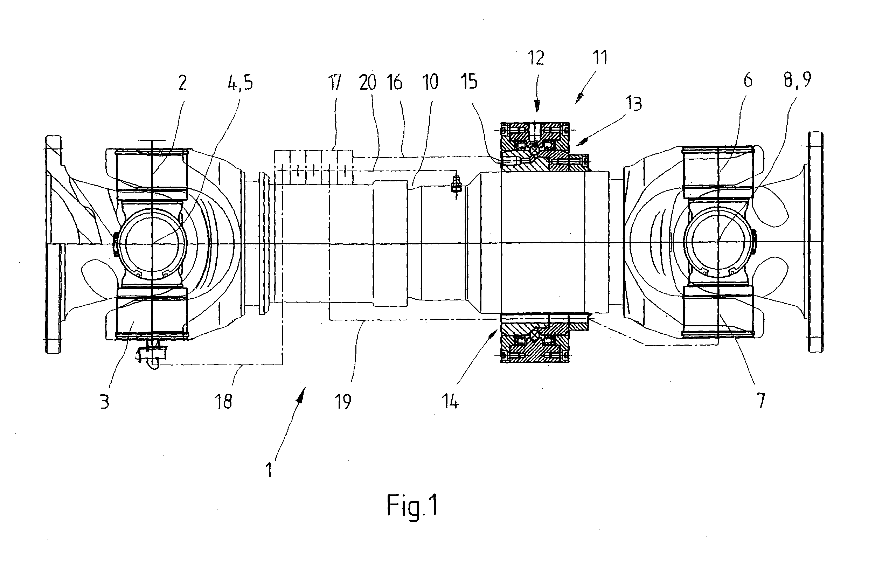

Fig. 1 zeigt eine Gelenkwelle 1, die vorliegend kardanisch aufgehängt ist. Auf derartige Gelenkwellen findet die Erfindung bevorzugt Anwendung. Es ergeben sich insgesamt neun Schmierstellen, nämlich auf der in Fig. 1 gezeigten linken Seite vier Schmierstellen 2 bis 5 und auf der in Fig. 1 gezeigten rechten Seite ebenfalls vier Schmierstellen 6 bis 9. Die neunte Schmierstelle befindet sich in etwa in der Mitte der Gelenkwelle, wo eine Längenausgleichsvorrichtung 10 angeordnet ist.

Auf der Welle ist eine erfindungsgemäße Fluidabgabeeinrichtung 11 angeordnet, und zwar in vorliegendem Fall zur Versorgung der Schmierstellen 2 bis 10 mit Schmiermittel. Hierzu weist die Fluidabgabeeinrichtung 11 einen Einlaß 12 auf, in den Schmiermittel - beispielsweise Fett - unter einem hohen Druck eingeführt wird. Dieser Druck kann 50 bar und mehr betragen.

Die Fluidabgabeeinrichtung weist einen feststehenden Ringkörper 13 sowie einen mit der Gelenkwelle umlaufenden Wellenring 14 auf, der als gesonderter Innenring ausgebildet ist. in dem umlaufenden Wellenring 14 ist ein Auslaß 15 für das Schmiermittel angeordnet. Von diesem Auslaß aus geht eine (hier lediglich schematisch angedeutete) Leitung 16 zu einem (ebenfalls lediglich schematisch angedeuteten) Progressivverteiler 17, der für die Verteilung des Schmierstoffs sorgt. Von dem Progressivverteiler 17 aus gelangt das Schmiermittel über Leitungen 18, 19, 20 zu den Reibstellen, wobei darauf hingewiesen sei, daß die Leitungen 18 bis 20 nur exemplarisch für die insgesamt neun Leitungen stehen. Alle Leitungen 18 bis 20, sowie ferner auch der Progressivverteiler drehen sich mit der umlaufenden Gelenkwelle mit.

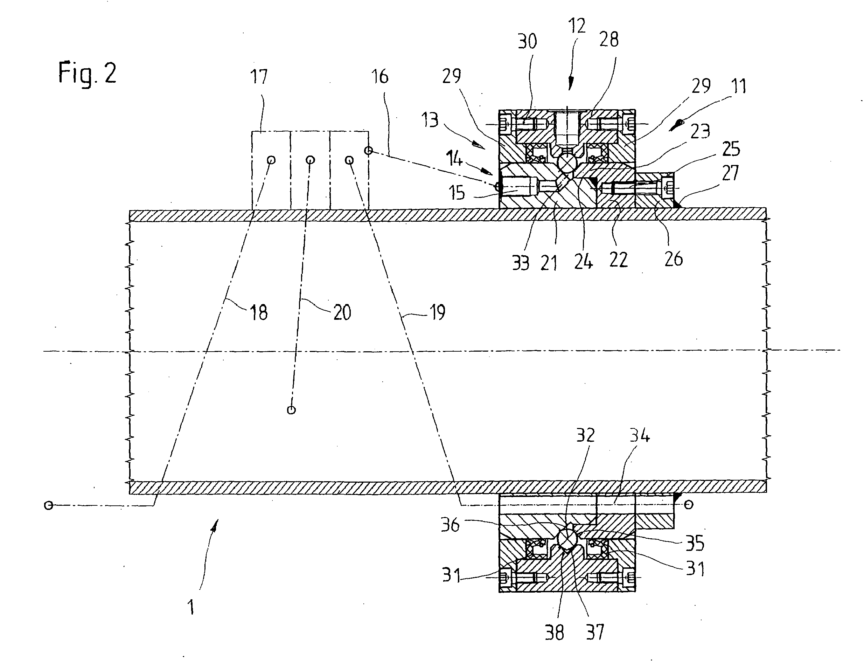

Es wird auf Fig. 2 Bezug genommen, in der eine Vergrößerung der erfindungsgemäßen Fluidabgabeeinrichtung 11 gezeigt ist. Der Wellenring 14 ist bei dem gezeigten Ausführungsbeispiel zweiteilig ausgebildet, wobei der linke Teil 21 den Auslaß 15 aufweist und mit einem zweiten Teil 22 des Wellenrings in Eingriff steht, der mit einem oberen Absatz 23 einen unteren Absatz 24 des linken Teils 21 übergreift. Der Wellenring 14 ist über eine Schraubverbindung 25 mit einem Anschlagring 26 verbunden, der seinerseits mit der Gelenkwelle verschweißt ist. Die Schweißnaht ist mit dem Bezugszeichen 27 versehen.

Der feststehende obere Ringkörper 13 ist ebenfalls mehrteilig ausgebildet. Er weist einen Hauptteil 28 sowie zwei Seitenteile 29 auf, die über eine Schraubverbindung 30 mit dem Hauptteil verbunden sind. Zwischen dem feststehenden Ringkörper 13 und dem Gelenkwellenring 14 sind Dichtungen 31 - beispielsweise Radial-Weliendichtringe - vorgesehen, die den Wellenring gegen den Ringkörper abdichten. Zwischen dem Wellenring 14 und dem Ringkörper 13 sind ferner Wälzkörper 32 angeordnet, an denen sich der Wellenring 14 einerseits und der Ringkörper 13 andererseits abstützen. Die Wälzkörper 32 gestatten einen reibungsarmen Umlauf des Wellenrings 14 und damit der gesamten Gelenkwelle 1, und zwar auch bei zusätzlicher axialer und/oder radialer Belastung.

Die erfindungsgemäße Fluidabgabeeinrichtung 11 funktioniert wie folgt. in den Einlaß 12 des feststehenden Ringkörpers 13 wird Schmiermittel eingelassen, und zwar unter einem hohen Druck. Das Schmiermittel gelangt zentral über die Wälzkörper 32 durch einen Kanal 33 zu dem Auslaß 15, von wo es über eine Leitung 16 zu dem Progressivverteiler 17 gelangt. Von dort aus wird es zu den einzelnen Reibstellen verteilt, und zwar über exemplarisch dargestellte Leitungen 18 bis 20. Die Wälzkörper 32 sind im Strömungsweg des Fluids angeordnet. Dies bedeutet, daß die Wälzkörper 32 nicht gesondert geschmiert werden müssen. Vielmehr erfolgt deren Schmierung automatisch, also durch das Passieren des Schmiermittels. Gleichermaßen schmiert das Schmiermittel die beidseitig der Wälzkörper angeordneten Dichtungen 31. Dies gewährleistet eine lange Lebensdauer. Zum Auswechseln der Dichtungen 31 werden die Verschraubungen 30 gelöst und lediglich die seitlichen Teile 29 des Ringkörpers 13 abgenommen. Damit sind die Dichtungen 31 frei zugänglich.

Auch der umlaufende Ringkörper 14 ist - wie bereits erwähnt - zweiteilig ausgebildet. Durch Lösen der (nicht gezeigten) Verschraubung zwischen dem linken Teil 21 und dem rechten Teil 22 kann das linke Teil entnommen werden.

In dem Wellenring 14 ist eine Öffnung 34 vorgesehen, durch die hindurch die Leitung 19 "hinter" die Fluidabgabeeinrichtung zu dem in Fig. 1 gezeigten rechten Gelenk geführt werden kann. Die Öffnung 34 kann als Bohrung ausgebildet sein und an praktisch beliebiger Stelle vorgenommen werden.

Die Wälzkörper 32 sind als Kugeln ausgebildet. Sie laufen unmittelbar auf Lagerflächen 35 bis 38, die von dem Wellenring bzw. dem Ringkörper gebildet sind, wobei die Lagerflächen 35 und 36 dem Wellenring 14 und die Lagerflächen 37 und 38 dem Ringkörper 13 zugeordnet sind. Zusätzliche Elemente, wie sie ein herkömmliches Wälzlager aufweist, sind nicht notwendig. Insbesondere kann ein Käfig entfallen. Die Lagerflächen 35 bis 38 sind zur Achsrichtung der Gelenkwelle 1 geneigt angeordnet. Sie können somit in besonders vorteilhafterweise sowohl Radial- als auch Axialkräfte aufnehmen.

### Bezugszeichenliste:

- 1: Gelenkwelle
- 2-9: Gelenklagerungen
- 10: Längenausgleich
- 11: Fluidabgabeeinrichtung
- 12: Einlaß
- 13: Ringkörper
- 14: Wellenringabschnitt
- 15: Auslaß
- 16: Leitung
- 17: Progressivverteiler
- 18 - 20: Leitungen
- 21: erster Teil des Wellenrings
- 22: zweiter Teil des Wellen rings
- 23: Absatz
- 24: Absatz
- 25: Verschraubung
- 26: Anschlagring
- 27: Schweißnaht
- 28: Hauptteil (des Ringkörpers)
- 29: Seitenteile (des Ringkörpers)
- 30: Verschraubung
- 31: Dichtungen
- 32: Wälzkörper
- 33: Kanal
- 34: Bohrung
- 35-38: Lagerflächen

## Patentansprüche

1. Fluidabgabeeinrichtung für Wellen (1), mit
- einem der Welle (1) zugeordneten Wellenringabschnitt (14), der sich bei Drehung der Welle mit der Welle mitdreht, und einem um den Wellenringabschnitt herum angeordneten, bei Drehung der Welle (1) feststehenden Ringkörper (13), der einen Einlaß (12) für das Fluid aufweist,
- wobei zwischen dem Wellenringabschnitt (14) und dem Ringkörper (13) Wälzkörper (32) angeordnet sind, an denen sich der Wellenringabschnitt und der Ringkörper abstützen, und
- wobei dem Wellenringabschnitt (14) ein Durchlaß (33) zugeordnet ist, der mit dem Einlaß (12) in Verbindung steht.

2. Fluidabgabeeinrichtung nach Anspruch 1, **dadurch gekennzeichnet, daß** die Wälzkörper (32) im Strömungsweg des Fluids angeordnet sind.

3. Fluidabgabeeinrichtung nach Anspruch 1 oder 2, **dadurch gekennzeichnet, daß** die Wälzkörper (32) fluiddicht vom Wellenringabschnitt (14) und vom Ringkörper (13) umschlossen sind.

4. Fluidabgabeeinrichtung nach einem der Ansprüche 1 bis 3, **dadurch gekennzeichnet, daß** der Wellenringabschnitt (14) mehrteilig ausgebildet ist.

5. Fluidabgabeeinrichtung nach einem der Ansprüche 1 bis 4, **dadurch gekennzeichnet, daß** der Wellenringabschnitt (14) Lagerflächen (35, 36) für die Wälzkörper (32) bildet.

6. Fluidabgabeeinrichtung nach einem der Ansprüche 1 bis 5, **dadurch gekennzeichnet, daß** der Ringkörper (13) Lagerflächen (37, 38) für die Wälzkörper (32) bildet.

7. Fluidabgabeeinrichtung nach Anspruch 5 oder 6, **dadurch gekennzeichnet, daß** die Lagerflächen (35, 36; 37, 38) zur Aufnahme von Axial- und Radialkräften geneigt zur Längsachse der Welle (1) angeordnet sind.

8. Fluidabgabeeinrichtung nach einem der Ansprüche 1 bis 7, **dadurch gekennzeichnet, daß** der Wellenringabschnitt (14) einen Auslaß (15) für das Fluid aufweist, der seitlich (axial) angeordnet ist.

9. Fluidabgabeeinrichtung nach einem der Ansprüche 1 bis 8, **dadurch gekennzeichnet, daß** der Wellenringabschnitt (14) mindestens einen im wesentlichen axialen Durchtritt (34) für eine Fluidleitung (19) aufweist.

10. Fluidabgabeeinrichtung nach einem der Ansprüche 1 bis 9, **dadurch gekennzeichnet, daß** der Ringkörper (13) mehrteilig ausgebildet ist, wobei er vorzugsweise derart zerlegbar ist, daß bei komplett montierter Fluidabgabeeinrichtung durch Abnehmen eines Teils (29) mindestens eine Dichtung (31) zugänglich ist.

11. Fluidabgabeeinrichtung nach einem der Ansprüche 1 bis 10, **dadurch gekennzeichnet, daß** ein Progressivverteiler (17) vorgesehen ist, der in strömungstechnischer Verbindung mit dem Wellenringabschnitt (14) steht und sich mit der Gelenkwelle (1) mitdreht.

12. Fluidabgabeeinrichtung nach einem der Ansprüche 1 bis 11, **dadurch gekennzeichnet, daß** die Fluidabgabeeinrichtung als Zentralschmiereinrichtung zur Schmierung von Gelenken mit Schmiermitteln, vorzugsweise Fett, ausgebildet ist.
